# EUROPÄISCHE PATENTANMELDUNG

(11) **EP 1 069 379 A2**
(43) Veröffentlichungstag der Anmeldung: **17.01.2001**
(21) Anmeldenummer: 00890217.3
(22) Anmeldetag: 13.07.2000
(51) Int. Cl.: F24D 19/10

(54) **Anlage zur Gewinnung von Wärmeenergie, insbesondere von Sonnenergie, und Verfahren zu deren Steuerung**

(30) Priorität: 15.07.1999 AT 122899
(71) Anmelder: ERI Energie-Ressourcen Institut Forschungs- und Entwicklungs-GmbH, 6382 Kirchdorf/Tirol (AT)
(72) Erfinder: Schwarz, Alois, 6382 Kirchdorf/Tirol (AT)
(74) Vertreter: Atzwanger, Richard, Dipl.-Ing. Patentanwalt

(57) **Zusammenfassung**

Anlage zur Gewinnung von Wärmeenergie, insbesondere von Sonnenenergie, mit einem Wärmekollektor (1), einem an diesen angeschlossenen Wärmespeicher (2) mit einem Wärmetauscher (12), einer Förderpumpe (3), einer Steuereinheit (4) sowie mit dem Wärmekollektor (1) und dem Wärmespeicher (2) zugeordneten Wärmefühlern (41, 42), deren Ausgänge an die Steuereinheit (4) angeschlossen sind. Dabei ist ein dritter Wärmefühler (43) vorgesehen, welcher dem vom Wärmetauscher (12) zum Wärmekollektor (1) zurückströmenden Trägermedium zugeordnet ist (Fig. 1).

## Beschreibung

Die gegenständliche Erfindung betrifft eine Anlage zur Gewinnung von Wärmeenergie, insbesondere von Sonnenenergie, mit einem Wärmekollektor, einem an diesen angeschlossenen Wärmespeicher mit einem Wärmetauscher, einer Förderpumpe, einer Steuereinheit sowie mit dem Wärmekollektor und dem Wärmespeicher zugeordneten Wärmefühlern, deren Ausgänge an die Steuereinheit angeschlossen sind.
Weiters betrifft die Erfindung ein Verfahren zur Steuerung einer derartigen Anlage.

Eine bekannte derartige Anlage besteht aus einem Wärmekollektor und einem an diesen angeschlossenen Wärmespeicher, z.B. einem Warmwasserbehälter, mit einem Wärmetauscher, wobei das im Wärmekollektor erwärmte Trägermedium mittels einer Pumpe durch den Wärmetauscher hindurch und hierauf zum Wärmekollektor zurückgefördert wird. Im Wärmespeicher wird das warme bzw. heiße Trägermedium vom Wärmetauscher an das im Wärmespeicher befindliche Wasser abgegeben, welches als Warmwasser für den Verbrauch oder für Heizungszwecke verwendet wird.

Zur Steuerung dieser Anlage sind zwei Wärmefühler vorgesehen, deren Ausgänge an eine Steuereinheit gelegt sind. Eine erster Wärmefühler ist dem Ausgang des Wärmekollektors zugeordnet. Der zweite Wärmefühler befindet sich im oberen Bereich des Wärmespeichers. Sobald der erste Wärmefühler einen Temperaturwert angibt, welcher um einen vorgegebenen Wert über dem vom zweiten Temperaturfühler angezeigten Temperaturwert liegt, wird durch die Steuereinheit die Pumpe eingeschaltet, wodurch das im Wärmekollektor erwärmte Trägermedium in den im Wärmespeicher befindlichen Wärmetauscher gefördert wird, in welchem das Trägermedium seinen Wärmeinhalt an das im Wärmespeicher befindliche Wasser abgibt, worauf das abgekühlte Trägermedium an den Wärmekollektor zurückgefördert wird. Sobald der zweite Wärmefühler einen Temperaturwert angibt, welcher um den vorgegebenen Wert unter dem Temperaturwert des ersten Wärmefühlers liegt, wird die Pumpe durch die Steuereinheit wieder abgeschaltet.

Diese bekannte Schaltung ist jedoch deshalb nachteilig, da sich im unteren Bereich des Wärmespeichers noch kaltes Wasser befinden kann, welches nicht erwärmt wird. Eine Anordnung des zweiten Wärmefühlers im unteren Bereich des Wärmespeichers ist jedoch deshalb nicht möglich, da dies zur Folge haben kann, daß bei niedrigen Temperaturen des Wärmekollektors dem im oberen Bereich des Wärmetauschers befindlichen heißen Wasser Wärme entzogen wird, welche über den Wärmetauscher aus dem Wärmespeicher in den Wärmekollektor zurückgefördert wird, wodurch Wärmeverluste bedingt werden würden.

Der gegenständlichen Erfindung liegt somit die Aufgabe zugrunde, eine Anlage zu schaffen, durch welche ein wesentlich besserer Wirkungsgrad erzielt wird, ohne daß dabei Wärmeverluste eintreten können. Dies wird erfindungsgemäß dadurch erzielt, daß ein dritter Wärmefühler vorgesehen ist, welcher dem vom Wärmetauscher zum Wärmekollektor zurückströmenden Trägermedium zugeordnet ist.
Vorzugsweise ist der dritte Wärmefühler in die Rücklaufleitung des Wärmetauschers eingesetzt.

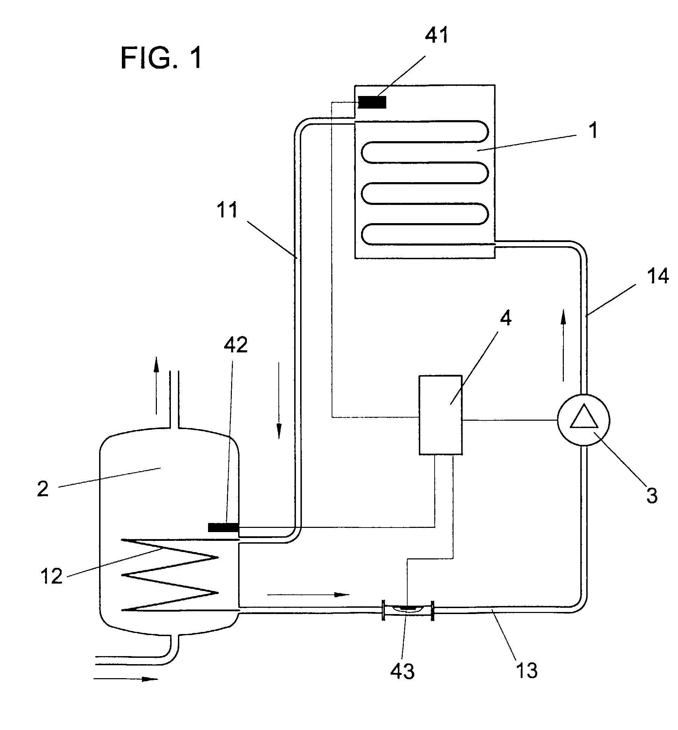

Eine erfindungsgemäße Anlage ist nachstehend anhand der Zeichnung erläutert. Die Fig. 1 zeigt eine Anlage zur Wärmegewinnung in schematischer Darstellung.

Diese Anlage besteht aus einem Wärmekollektor 1, dessen Vorlauf über eine Leitung 11 an einen im Wärmespeicher 2 befindlichen Wärmetauscher 12 angeschlossen ist. Vom Wärmetauscher 12 führt eine Leitung 13 zu einer Pumpe 3, von welcher eine Leitung 14 zum Rücklauf des Wärmekollektors 1 führt. Im geschlossenen Kreislauf des Wärmespeichers 1 und des Wärmetauschers 12 befindet sich ein Trägermedium.

Die Pumpe 3 wird durch eine Steuereinheit 4 gesteuert. An die Steuereinheit 1 sind ein erster, im Wärmekollektor 1 vorgesehener Wärmefühler 41 und ein zweiter, im oberen Bereich des Wärmespeichers 2 vorgesehener Wärmefühler 42 angeschlossen. Schließlich ist in der vom Wärmetauscher 2 weg führenden Leitung 13 ein dritter Wärmefühler 43 angeordnet.
Die Wirkungsweise dieser Anlage ist wie folgt:
Sobald der vom ersten Wärmefühler 41 angezeigte Temperaturwert, welcher die Vorlauftemperatur des Wärmekollektors 1 darstellt, über einen vorgegebenen Wert von z.B. 5°C, des vom zweiten Temperaturfühler 42 angezeigten Temperaturwertes angestiegen ist, spricht eine in der Steuereinheit 4 befindliche Differenzschaltung an, wodurch die Pumpe 3 eingeschaltet wird. Hierdurch wird das im Wärmekollektor 1 befindliche heiße Trägermedium in den Wärmetauscher 12 gefördert, in welchem die Wärme an das im Wärmespeicher 2 befindliche kalte Wasser abgegeben wird, wodurch dieses erwärmt wird. Dieses warme bzw. heiße Wasser kann für den Verbrauch oder für Heizungszwecke verwendet werden.

In weiterer Folge erfolgt jedoch die Steuerung der Pumpe 3 nicht durch den zweiten Wärmefühler 42, sondern vielmehr durch den dritten Wärmefühler 43, welcher die Pumpe 3 erst dann abschaltet, sobald der von diesem angezeigte Temperaturwert auf einen Wert angestiegen ist, welcher um einen vorgegebenen Wert von z.B. gleichfalls 5°C unterhalb des vom ersten Wärmefühlers 41 angezeigten Temperaturwertes liegt. Hierfür dient gleichfalls eine Differenzschaltung, durch welche die Pumpe 3 abgeschaltet wird. Demgegenüber ist der vom zweiten Temperaturfühler 42 angezeigte Temperaturwert für die Abschaltung der Pumpe 3 unmaßgeblich.

Da der vom dritten Temperaturfühler 43 angezeigte Temperaturwert erst dann maßgeblich ansteigt, sobald auch das im unteren Bereich des Wärmespeichers 2 befindliche Wasser erwärmt wurde, wird somit durch diese Anlage eine weitgehend verbesserte Aufnahme und Übertragung der im Wärmekollektor 1 gewonnenen Wärme bewirkt, als dies bei bekannten Anlagen der Fall ist, wodurch der Wirkungsgrad einer derartigen Anlage sehr verbessert wird.

Das Verfahren zum Betrieb einer derartigen Anlage ist wie folgt:
Soferne z.B. der erste Wärmefühler 41 eine Temperatur von 50°C und der zweite Wärmefühler 42 eine Temperatur von 30°C anzeigt, schaltet die Steuereinheit 4 die Pumpe 5 ein, wodurch im Wärmekollektor 1 befindliche Wärme durch das heiße Trägermedium vom Wärmekollektor 1 auf den Wärmetauscher 12 übertragen wird, von welchem die Wärme an das im Wärmespeicher 2 befindliche Wasser abgegeben wird. Da in weiterer Folge der Wärmefühler 42 nicht maßgeblich ist, kann der vom Temperaturfühler 42 angezeigte Temperaturwert unabhängig vom Temperaturwert des erste Wärmefühlers 41 beliebig ansteigen, ohne daß ein Steuerungsvorgang erfolgt. Vielmehr ist für die Abschaltung der Pumpe 3 nur der dritte Temperaturfühler 43 maßgeblich, da erst dann eine Abschaltung der Pumpe 3 erfolgt, sobald der vom dritten Temperaturfühler 43 angezeigte Temperaturwert auf einen Wert angestiegen ist, welcher z.B. um 5°C unter demjenigen des vom ersten Temperaturfühler 41 angezeigten Wertes liegt.

Da aufgrund einer Änderung in den klimatischen Verhältnissen der vom ersten Temperaturfühler 41 angezeigte Wert selbst unter den vom zweiten Temperaturfühler 42 angezeigten Wert absinken kann, wird dessen ungeachtet so lange aus dem Wärmekollektor 1 in den Wärmespeicher 2 Wärme übertragen, als der vom dritten Wärmefühler 43 angezeigte Temperaturwert unter dem vom ersten Wärmefühler 41 angezeigten Temperaturwert liegt. Hierdurch wird ein wesentlich verbesserter Wirkungsgrad einer derartigen Anlage erzielt, wobei jedoch gewährleistet ist, daß aus dem Wärmespeicher 2 keine Wärmeenergie an den Wärmekollektor 1 zurückgeführt wird.

Die angegebene Differenz der Temperaturen kann auch mit einem anderen Wert, z.B. mit 2°C, gewählt werden.

## Patentansprüche

1. Anlage zur Gewinnung von Wärmeenergie, insbesondere von Sonnenenergie mit einem Wärmekollektor (1), einem an diesen angeschlossenen Wärmespeicher (2) mit einem Wärmetauscher (12), einer Förderpumpe (3), einer Steuereinheit (4) sowie mit dem Wärmekollektor (1) und dem Wärmespeicher (2) zugeordneten Wärmefühlern (41, 42), deren Ausgänge an die Steuereinheit (4) angeschlossen sind, dadurch gekennzeichnet, daß ein dritter Wärmefühler (43) vorgesehen ist, welcher dem vom Wärmetauscher (12) zum Wärmekollektor (1) zurückströmenden Trägermedium zugeordnet ist.

2. Anlage nach Anspruch 1, dadurch gekennzeichnet, daß der dritte Wärmefühler (43) in die Rücklaufleitung (13) des Wärmetauschers (1) eingesetzt ist.

3. Verfahren zur Steuerung einer Anlage nach einem der Ansprüche 1 und 2, dadurch gekennzeichnet, daß die Einschaltung der Pumpe (3) durch den im Wärmespeicher (2) befindlichen zweiten Wärmefühler (42) bewirkt wird und daß die Abschaltung der Pumpe (3) durch den dem zum Wärmekollektor (1) zurückströmenden Trägermedium zugeordneten dritten Wärmefühler (43) erfolgt.
